# EUROPEAN PATENT APPLICATION

(11) **EP 1 744 067 A1**
(43) Date of publication of application: **17.01.2007**
(21) Application number: 06380185.6
(22) Date of filing: 29.06.2006
(51) Int. Cl.: F16B 21/09, F16B 5/06

(54) **Sliding part assembly device**

(30) Priority: 14.07.2005 ES 200501713
(71) Applicant: Möllertech Orense, S.L., P.E. Pol. Pereiro de Aguiar, 21,22,23 32710 Pereiro de Aguiar (Orense) (ES)
(72) Inventor: Gonzalez Lopez, Alberto, 01470 Amurrio (Alava) (ES)
(74) Representative: Canadell-Isern, Roberto

(57) **Abstract**

**SUMMARY**

**SLIDING PART ASSEMBLY DEVICE**, which consists of the mounting of a plastic part (1) on another part (2), which may or may not be of the same material and with variable shapes, by sliding a part (1) with respect to the other part (2) and with interlocking in the assembly direction, which prevents its disassembly.

## Description

### PURPOSE OF THE INVENTION

The purpose of this Invention is a sliding part assembly device which, for the function for which it is intended, offers several advantages that will be described hereinafter, apart from others inherent in its organization and constitution.

More specifically, this invention refers to a device for mounting a plastic part on another, which may or may not be of the same material, by sliding one part with respect to the other and interlocking in the assembly direction to prevent its disassembly.

### BACKGROUND OF THE INVENTION

At present, as reference to the state of the art, it should be mentioned that there are many known assembly systems and devices (screws, tongue and groove joints, etc.) which are more or less complex, thus having consequences on job times and cost, and at the same time many of them undergo wear which eventually causes disassembly of the assembled parts.

### DESCRIPTION OF THE INVENTION

The sliding part assembly device covered by the invention includes a part to be mounted and a support part, and the novelty of this device is the way the part to be mounted is presented. The device of this invention includes an opening in the support part; this opening is wide in the first assembly zone and then becomes narrower to ensure a good fit, transversely to the assembly direction, with the neck of a connecting piece of the part to be mounted.

The two zones of the support part opening are attached, although they may be at different levels.

The part that is going to be mounted has a head on the connecting piece that can pass through the first zone of the opening but cannot pass through the second narrower zone, thus securing the parts perpendicularly to the assembly direction.

In the last section of the assembly path, a stub on the part to be mounted is received by an orifice of the support part, so that disassembly would be impossible without breaking one of the described parts.

Finally, of note is the fact that these parts may be of any shape and size, as this would not change the essence of the invention.

Therefore, with this invention, a fast, secure assembly is achieved which shortens job times and lowers the costs, among many other advantages.

To complement the following description and to help better understand the features, this description is accompanied by a set of drawings whose figures, on an illustrative but not limitative basis, show the most significant details of the invention.

### BRIEF DESCRIPTION OF THE FIGURES

Figure 1.1. Shows a perspective of the part to be mounted.
Figure 1.2. Shows a cross section of the part to be mounted according to A-A, as indicated in preceding figure 1.1.
Figure 2.1. Shows a perspective of the support part.
Figure 2.2. Shows a cross section of the part to be mounted according to B-B, as indicated in preceding figure 2.1.
Figure 3. Shows a cross section of both parts in the initial assembly position.
Figure 4. Shows a cross section of both parts in the final assembly position.
Figure 5. Shows a perspective and detailed view of the fit between the two parts.

### DESCRIPTION OF A SAMPLE EXECUTION OF THE INVENTION

Based on the above mentioned figures and in accordance with the numbering used, an illustrative, though not limitative, example of the invention can be seen in these figures, which consists of a sliding assembly device for parts that may have different shapes.

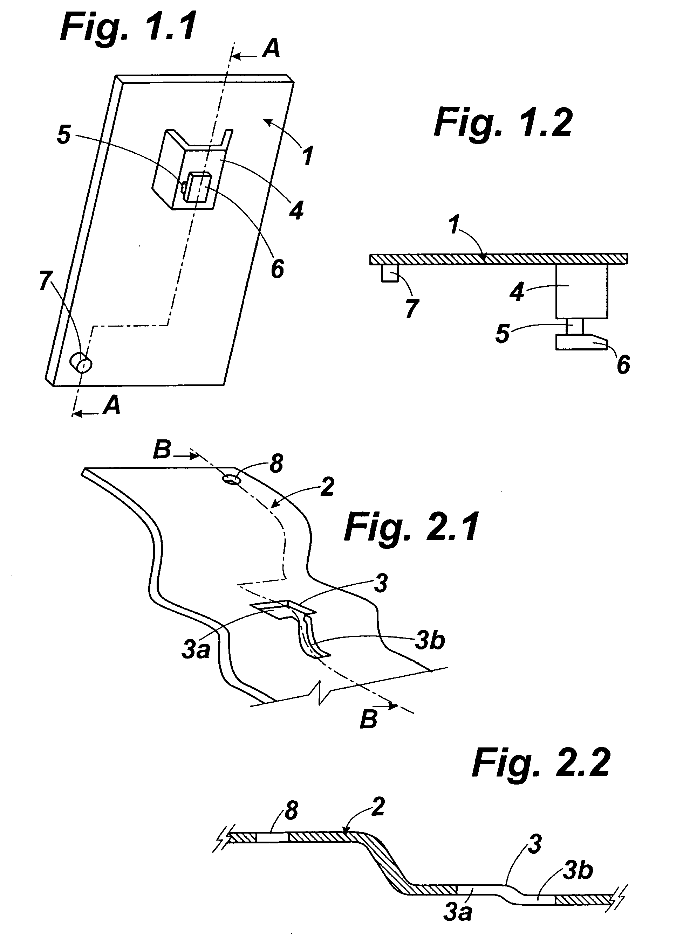

The device is for mounting a plastic part -1- (Fig.1) on another part -2- (Fig.2), which may or may not be made of like material, by means of sliding one part -1- with respect to the other -2-, which involves an interlocking in the assembly direction that prevents its disassembly.

The novelty of this assembly device lies in the shape of the part to be mounted -1- in the interlocking zone. The assembly device consists of an opening -3- in the support part -2-, which is wider in the first assembly zone -3a-, and then becomes narrower in another zone -3b- to ensure a good fit, transversely to the assembly direction, with the neck -5- of the connecting piece -4- of the part -1- to be mounted. The two zones -3a- and -3b- of the opening -3- of the support part -2- are attached, although they may be at different levels.

The connecting piece -4- of the part that is going to be mounted has a head -6-, that can pass through the first zone -3a- of the opening -3-, but cannot pass through the second narrower zone -3b-, thus securing the parts perpendicularly to the assembly direction.

In the last section of the assembly path, a stub -7- on the part to be mounted -1- is received by an orifice -8- of the support part -2-, so that disassembly would be impossible without breaking one of the described parts.

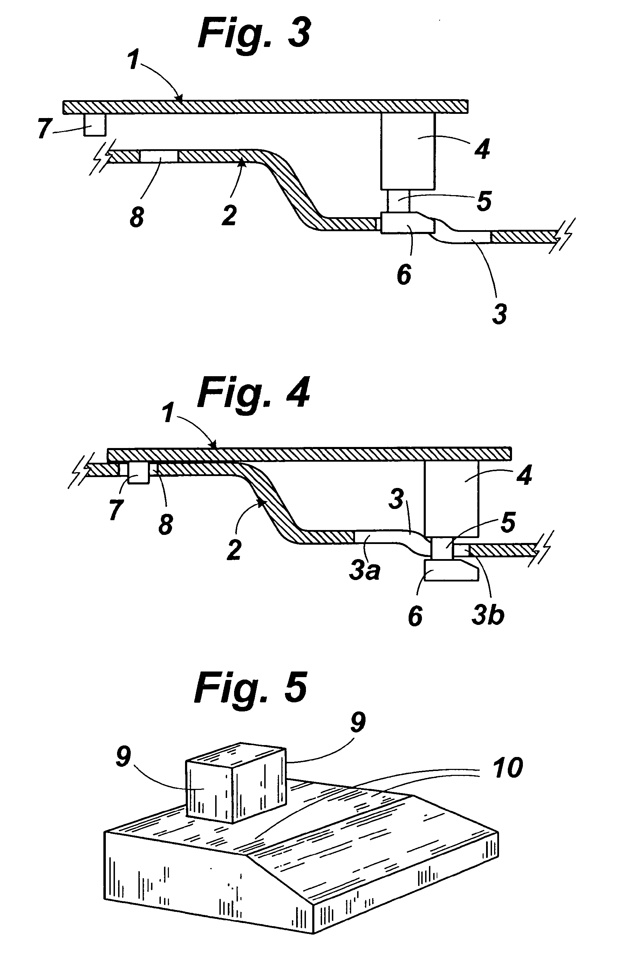

Figures 3 and 4 show the initial and final assembly positions, and in Figure 3 a vertical arrow indicates the vertical downward movement that allows the head -6- of the connecting piece -4- of the part to be mounted -1- pass through the widest zone -3a- of the opening -3- of the support part -2-, whereas Figure 4 shows the final position provided by the downward and subsequently sliding movement, indicated by the horizontal arrow of Figure 1, where the head -6- of the connecting piece -4- is fitted to the end zone -3b- of the opening -3-, as the stub -7- of piece -1- is received in the opening -8- of the part -2-.

Figure 5 shows an assembly perspective where the transverse -9- and vertical -10- sides of the fit are indicated.

## Claims

1. SLIDING PART ASSEMBLY DEVICE, which provides for the mounting of a plastic part (1) on another part (2), by sliding the part (1) with respect to the other part (2) and with interlocking in the assembly direction to prevent its disassembly, **characterized by** the fact that the part to be mounted (1) has in the interlocking zone a connecting piece (4) that is compatible with an opening (3) in the support part (2), and this opening (3) has a first wider assembly zone (3a) that continues on to a second narrower zone (3b), ensuring a fit transversely to the assembly direction with the neck (5) of the connecting piece (4) of the part (1) to be mounted; this part (1) to be mounted is provided with a head (6) on the connecting piece (4), the dimensions of which are such that it can pass through the wider first zone (3a) of the opening (3), but not through the second narrower zone (3b), thus ensuring that parts (1) and (2) are secured perpendicurly to the assembly direction.

2. SLIDING PART ASSEMBLY DEVICE, according to claim 1, **characterized by** the fact that in the last section of the assembly path, a stub (7) has been provided on the part (1) to be mounted, and this stub (7) is suitable for being received in an orifice (8) of the support part (2), making the disassembly of parts (1) and (2) impossible.
